# EUROPEAN PATENT APPLICATION

(11) **EP 4 835 155 A1**
(43) Date of publication of application: **04.11.2026**
(21) Application number: 24913631.8
(22) Date of filing: 19.12.2024
(51) Int. Cl.: C25B 11/053, C25B 11/093, C25B 1/04, C25B 9/00

(54) **ELECTRODE FOR WATER ELECTROLYSIS CELL, MANUFACTURING METHOD THEREFOR, AND MEMBRANE-ELECTRODE ASSEMBLY AND WATER ELECTROLYSIS CELL FOR WATER ELECTROLYSIS CELL INCLUDING SAME**

(30) Priority: 29.12.2023 KR 20230197616; 16.12.2024 KR 20240187334
(71) Applicant: Kolon Industries, Inc., Seoul 07793 (KR)
(72) Inventor: LIM, Youngjoon, Seoul 07793 (KR); KIM, Jun Young, Seoul 07793 (KR); KIM, Jung Ho, Seoul 07793 (KR); LEE, Ju Sung, Seoul 07793 (KR); PARK, Hyun Jin, Seoul 07793 (KR)
(74) Representative: Vossius & Partner Patentanwälte Rechtsanwälte mbB
(86) International application number: PCT/KR2024/020757
(87) International publication number: WO 2025/143688

(57) **Abstract**

Provided is an electrode for water electrolysis cells, which comprises: a catalyst layer including noble metal oxide-containing active particles and an ion conductor; and a porous pattern layer located on one surface of the catalyst layer, wherein the porous pattern layer extends in a first direction parallel to one surface of the catalyst and includes first patterns parallel to the one surface of the catalyst layer and spaced apart in a second direction different from the first direction, the first patterns including a stack of multiple nanowires, the nanowires including a metal oxide doped with fluorine.

## Description

### [Technical Field]

The present disclosure relates to an electrode for a water electrolysis cell and a manufacturing method thereof, and a membrane-electrode assembly for a water electrolysis cell and a water electrolysis cell including the same.

This research was supported by the Ministry of Trade, Industry and Energy (MOTIE) and the Korea Institute of Energy Technology Evaluation and Planning (KETEP). (Project Number: 20223030040220)

### [Background Art]

Recent energy demands and environments require sustainability, environmental friendliness, and high efficiency, and among them, hydrogen is drawing attention as a source of renewable energy.

Hydrogen energy is classified into gray, blue, and green hydrogen according to a production method, and gray and blue hydrogen present the problem that carbon dioxide is generated during the production process or cannot be completely removed, as these methods use fossil fuels. Green hydrogen refers to hydrogen produced by electrolyzing limitless water, and because carbon dioxide is not generated in a process of producing hydrogen, it is in the spotlight as an ultimate eco-friendly energy source. To produce green hydrogen, water electrolysis technology is required.

Water electrolysis technology refers to an electrochemical technology that generates hydrogen and oxygen by electrolyzing water and transporting ions through a separator. Water electrolysis may be classified into two half-cell reactions, one of which is a hydrogen evolution reaction (HER) occurring at a reduction electrode, and the other of which is an oxygen evolution reaction (OER) occurring at an oxidation electrode.

A conventional electrode for a water electrolysis cell has a problem in that water electrolysis performance is affected by mass transfer resistance, Schottky contact, or the like, depending on a surface state of the electrode. In order to solve this problem, an additional layer is required, but research on a layer having electrochemical corrosion resistance and conductivity is still needed.

### [Disclosure]

### [Technical Problem]

Provided is an electrode for a water electrolysis cell that may exhibit high electrochemical durability and conductivity even in a water electrolysis operating environment of high voltage and low pH.

### [Technical Solution]

In one embodiment, provided is an electrode for a water electrolysis cell comprising: a catalyst layer comprising active particles including a noble metal oxide and an ion conductor; and a porous pattern layer positioned on one surface of the catalyst layer, wherein the porous pattern layer comprises first patterns extending in a first direction parallel to the one surface of the catalyst layer and spaced apart and disposed in a second direction parallel to the one surface of the catalyst layer and different from the first direction, the first pattern comprises a plurality of stacked nanowires, and the nanowire comprises a fluorine-doped metal oxide.

In another embodiment, provided is a method of manufacturing an electrode for a water electrolysis cell comprising: (i) manufacturing a nanowire comprising a metal oxide; (ii) mixing the nanowire and a fluorine precursor, and then performing heat treatment to manufacture a nanowire comprising a fluorine-doped metal oxide; (iii) disposing a first patterning mask comprising a plurality of slits extending in a first direction and spaced apart in a second direction different from the first direction, on a catalyst layer comprising active particles including a noble metal oxide and an ion conductor; and (iv) spraying a slurry in which the nanowires comprising the fluorine-doped metal oxide are dispersed on the first patterning mask to form a plurality of first patterns on the catalyst layer.

In another embodiment, provided is a membrane-electrode assembly for a water electrolysis cell comprising: a polymer electrolyte membrane; an oxygen evolution electrode positioned on one surface of the polymer electrolyte membrane and including the electrode for a water electrolysis cell; and a hydrogen evolution electrode positioned on the other surface of the polymer electrolyte membrane.

In another embodiment, provided is a water electrolysis cell including the membrane-electrode assembly for a water electrolysis cell.

### [Advantageous Effects]

An electrode for a water electrolysis cell according to an embodiment may exhibit high electrochemical durability and conductivity even in a water electrolysis operating environment of high voltage and low pH.

### [Brief Description Of The Drawings]

FIG. 1 is an illustration showing a method of manufacturing an electrode for a water electrolysis cell according to an embodiment.
FIG. 2 is an illustration showing a corresponding equivalent circuit used for fitting of EIS obtained at 1.5 V and 1.9 V.
FIG. 3 is a diagram illustrating water electrolysis performance of a membrane-electrode assembly according to an embodiment.

### [Best Mode]

Hereinafter, specific embodiments will be described in detail so that those of ordinary skill in the art may easily practice them. However, the present invention may be embodied in many different forms and is not limited to the embodiments described herein.

The terms used herein are used only to describe exemplary embodiments, and are not intended to limit the present invention. A singular expression includes a plural expression unless the context clearly indicates otherwise.

The term "combination thereof" refers to a mixture, a laminate, a composite, a copolymer, an alloy, a blend, a reaction product, and the like of components

In the present specification, terms such as "include", "comprise", or "have" are intended to designate the presence of implemented features, numbers, steps, components, or a combination thereof, and it should be understood that they do not preclude the possibility of the presence or addition of one or more other features, numbers, steps, components, or a combination thereof.

In the drawings, thicknesses are exaggerated to clearly express various layers and regions, and similar portions are denoted by the same reference numerals throughout the specification. When a portion such as a layer, a membrane, a region, or a plate is referred to as being "on" or "above" another portion, it includes not only a case in which the portion is "directly on" another portion but also a case in which another portion is present therebetween. Conversely, when a portion is referred to as being "directly on" another portion, it means that no other portion is present therebetween.

A "layer" includes not only a shape formed on an entire surface but also a shape formed on a partial surface when observed in a plan view.

An average particle diameter may be measured by a method widely known to those skilled in the art, and for example, it may be measured by a particle size analyzer, or may be measured from a transmission electron microscope image or a scanning electron microscope image. Alternatively, an average particle diameter value may be obtained by measuring using a dynamic light scattering method, performing data analysis to count the number of particles for each particle size range, and calculating therefrom. Unless otherwise defined, the average particle diameter may mean a diameter (D₅₀) of particles having a cumulative volume of 50 vol% in a particle size distribution. In addition, unless otherwise defined, the average particle diameter may be obtained by measuring sizes (diameters or major axis lengths) of about 20 particles randomly from a scanning electron microscope image to obtain a particle size distribution, and taking a diameter (D₅₀) of particles having a cumulative volume of 50 volume% in the particle size distribution as the average particle diameter.

"Or" is not interpreted in an exclusive sense, and for example, "A or B" is interpreted as including A, B, A+B, and the like.

"Metal" is interpreted as a concept including common metals, transition metals, and metalloids (semi-metals).

### Electrode for a water electrolysis cell

### Catalyst layer

According to an embodiment, an electrode for a water electrolysis cell comprises a catalyst layer comprising active particles including a noble metal oxide and an ion conductor.

The noble metal may be a non-platinum based precious metal, and for example, the non-platinum based precious metal may include palladium (Pd), ruthenium (Ru), iridium Ir, an alloy thereof, or a combination thereof. A noble metal oxide according to an embodiment may include IrOₓ (x is an integer of 1 to 3), RuOₓ (x is an integer of 1 to 3), PdOₓ (x is an integer of 1 to 3), IrMOₓ (M includes Ru, Sn, Ti, Te, Nb, or a combination thereof, and x is an integer of 1 to 3), or a combination thereof, and more specifically, may include IrOₓ (x is an integer of 1 to 3). When the noble metal oxide is included in the catalyst layer, there is an advantage that high catalytic activity may be exhibited.

The electrode for a water electrolysis cell may further comprise an ion conductor to improve adhesion of the active particles and transfer hydrogen ions, and the ion conductor may comprise a cation exchange group to secure ion conductivity.

The cation exchange group may be a sulfonic acid group, a carboxyl group, a boronic acid group, a phosphoric acid group, a phosphonic acid group, an imide group, a sulfonimide group, a sulfonamide group, or a sulfonyl fluoride group.

The ion conductor may be a fluorine-based ion conductor, a hydrocarbon-based ion conductor, or a mixture thereof. The fluorine-based ion conductor may be a fluorine-based polymer having the cation exchange group in a side chain and containing fluorine in a main chain, for example, poly(perfluorosulfonic acid), poly(perfluorocarboxylic acid), or the like. The hydrocarbon-based ion conductor may be a hydrocarbon-based polymer having the cation exchange group in a side chain [for example, sulfonated polyimide (S-PI), sulfonated polyarylethersulfone (S-PAES), sulfonated polyetheretherketone (SPEEK), sulfonated polybenzimidazole (SPBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, sulfonated polyarylene ether sulfone ketone, or the like].

The ion conductor according to an embodiment may have hydrogen ion conductivity. In the ion conductor having hydrogen ion conductivity, H in the cation exchange group at a side chain terminal may be substituted with Na, K, Li, Cs, or tetrabutylammonium. When substituting H with Na in the ion exchange group at the end of the side chain, NaOH is used for substitution during the preparation of a catalyst composition, when substituting with tetrabutylammonium, tetrabutylammonium hydroxide is used for substitution, and K, Li, or Cs may also be substituted using an appropriate compound.

The ion conductor may be used in the form of a single substance or a mixture, and may also optionally be used together with a non-conductive compound for the purpose of further improving adhesion to a polymer electrolyte membrane. A content of the non-conductive compound may be appropriately adjusted according to the intended use. As the non-conductive compound, at least one selected from polytetrafluoroethylene (PTFE), a tetrafluoroethylene-hexafluoropropylene copolymer (FEP), a tetrafluoroethylene-perfluoro alkyl vinyl ether copolymer (PFA), ethylene/tetrafluoroethylene (ETFE), an ethylene chlorotrifluoro-ethylene copolymer (ECTFE), polyvinylidene fluoride, a copolymer of polyvinylidene fluoride-hexafluoropropylene (PVdF-HFP), dodecylbenzenesulfonic acid, and sorbitol may be used.

In one embodiment, based on 100 wt% of a total amount of the active particles including the noble metal oxide and the ion conductor, the active particles including the noble metal oxide may be included in an amount of 90 wt% to 99.5 wt%, for example, may be included in an amount of 91 wt% to 99 wt%, or 92 wt% to 98 wt%. In addition, based on 100 wt% of the total amount of the active particles including the noble metal oxide and the ion conductor, the ion conductor may be included in an amount of 0.5 wt% to 10 wt%, for example, may be included in an amount of 1 wt% to 9 wt%, or 2 wt% to 8 wt%. When the contents of the active particles including the noble metal oxide and the ion conductor are included in the above ranges, a catalyst including the same may form a conductive network to reduce sheet resistance of the electrode, and may improve performance of the water electrolysis cell.

### Porous pattern layer

An electrode for a water electrolysis cell according to an embodiment comprises a catalyst layer comprising active particles including a noble metal oxide and an ion conductor; and a porous pattern layer positioned on one surface of the catalyst layer, and the porous pattern layer comprises first patterns extending in a first direction parallel to the one surface of the catalyst layer and spaced apart and disposed in a second direction parallel to the one surface of the catalyst layer and different from the first direction. In this case, the first patterns are provided in plurality.

In one embodiment, a first direction may be parallel to an in-plane direction of one surface of a catalyst layer, and the in-plane direction of the one surface of the catalyst layer may refer to a surface direction perpendicular to a thickness direction of the one surface of the catalyst layer. In this case, for example, the first direction may refer to a coating progress direction when the catalyst layer is coated by a method such as spray coating, or an in-plane direction of a pattern of a pattern mask used when a porous pattern layer is coated on the catalyst layer. The second direction may be parallel to an in-plane direction of the one surface of the catalyst layer, and the in-plane direction of the one surface of the catalyst layer may refer to a surface direction perpendicular to a thickness direction of the one surface of the catalyst layer. In this case, the second direction is a direction different from the first direction, and for example, the second direction and the first direction may be perpendicular to each other, and the second direction may refer to a direction perpendicular to the coating progress direction when the catalyst layer is coated by a method such as spray coating, or a width direction of the pattern of the pattern mask used when the porous pattern layer is coated on the catalyst layer.

An extension length of the first pattern in the first direction may be adjusted without limitation as long as it is within a range of an active area of the electrode for a water electrolysis cell. In addition, a width of the first pattern in the second direction may be 20 *µ*m to 800 *µ*m, for example, 20 *µ*m to 400 *µ*m, 20 *µ*m to 250 *µ*m, 80 *µ*m to 200 *µ*m, or 100 *µ*m to 150 *µ*m. In addition, a separation distance of the first pattern in the second direction may be 20 *µ*m to 800 *µ*m, for example, 20 *µ*m to 400 *µ*m, 20 *µ*m to 250 *µ*m, 80 *µ*m to 200 *µ*m, or 100 *µ*m to 150 *µ*m. In addition, a thickness of the first pattern in a third direction perpendicular to the one surface of the catalyst layer may be 0.01 *µ*m to 500 *µ*m, for example, 0.03 *µ*m to 400 *µ*m, 0.05 *µ*m to 300 *µ*m, 0.05 *µ*m to 150 *µ*m, or 0.05 *µ*m to 100 *µ*m. When the first pattern has the extension length, the width, the separation distance, and the thickness in the above ranges, it may facilitate desorption and discharge of oxygen generated during a water electrolysis reaction to lower mass transfer resistance, thereby having an advantage of reducing performance degradation at a high voltage.

According to an embodiment, a porous pattern layer included in an electrode for a water electrolysis cell may further comprise second patterns positioned on one surface of the first patterns, extending in the second direction, and spaced apart and disposed in the first direction. In this case, the first patterns are provided in plurality.

An extension length of the second pattern in the second direction may be adjusted without limitation as long as it is within a range of an active area of an electrode for a water electrolysis cell. In addition, a width of the second pattern in the first direction may be 20 *µ*m to 800 *µ*m, for example, 20 *µ*m to 400 *µ*m, 20 *µ*m to 250 *µ*m, 80 *µ*m to 200 *µ*m, or 100 *µ*m to 150 *µ*m. In addition, a separation distance of the second pattern in the first direction may be 20 *µ*m to 800 *µ*m, for example, 20 *µ*m to 400 *µ*m, 20 *µ*m to 250 *µ*m, 80 *µ*m to 200 *µ*m, or 100 *µ*m to 150 *µ*m. In addition, a thickness of the second pattern in a third direction perpendicular to the one surface of the catalyst layer may be 0.01 *µ*m to 500 *µ*m, for example, 0.03 *µ*m to 400 *µ*m, 0.05 *µ*m to 300 *µ*m, 0.05 *µ*m to 150 *µ*m, or 0.05 *µ*m to 100 *µ*m. When the second pattern has an extension length, a width, a separation distance, and a thickness in the above ranges, it may facilitate desorption of oxygen and discharge of oxygen generated during a water electrolysis reaction to lower mass transfer resistance, thereby having an advantage of reducing performance degradation at a high voltage.

According to an embodiment, a first pattern and a second pattern included in a porous pattern layer of an electrode for a water electrolysis cell each comprise a plurality of stacked nanowires, and the nanowire comprises a fluorine-doped metal oxide.

The metal may include, for example, tungsten (W), titanium (Ti), nickel (Ni), ruthenium (Ru), tantalum (Ta), tin Sn, cobalt (Co), or a combination thereof. Accordingly, the metal oxide may include tungsten oxide, titanium oxide, nickel oxide, ruthenium oxide, tantalum oxide, tin oxide, cobalt oxide, or a combination thereof, and more specifically, may include tin oxide. In addition, since the fluorine-doped metal oxide is included in the nanowire, a bonding force between metal oxides is improved and an aspect ratio of the metal oxide is increased, thereby having an advantage of preventing a doped material or the metal of the metal oxide from eluting in a water electrolysis operating environment and degrading membrane-electrode performance, and improving durability.

In one embodiment, a content of fluorine with respect to 100 at% of a total amount of components measured by X-ray Photoelectron Spectroscopy (XPS) in the entire fluorine-doped metal oxide may be 1 at% to 10 at%, and for example, may be 5 at% to 10 at%, or 8 at% to 10 at%. When the content of fluorine in the entire fluorine-doped metal oxide satisfies the above range, it may be possible to uniformly dope fluorine, thereby reducing sheet resistance of the electrode and improving performance of the water electrolysis cell.

A length of the nanowire may be 1 *µ*m to 200 *µ*m, and for example, may be 3 *µ*m to 180 *µ*m, 5 *µ*m to 165 *µ*m, or 10 *µ*m to 150 *µ*m. In addition, a diameter of the nanowire may be 0.1 *µ*m to 1.0 *µ*m, and for example, may be 0.1 *µ*m to 0.9 *µ*m, or 0.2 *µ*m to 0.8 *µ*m. When the nanowire has a length and a diameter in the above ranges, electrical conductivity is improved due to networking of metal oxide particles, and thus there is an advantage that contact resistance may be reduced.

A thickness of the porous pattern layer included in the electrode for a water electrolysis cell according to an embodiment may be 0.01 *µ*m to 500 *µ*m, and for example, may be 0.02 *µ*m to 400 *µ*m, 0.03 *µ*m to 300 *µ*m, 0.04 *µ*m to 150 *µ*m, or 0.05 *µ*m to 100 *µ*m. Here, the thickness of the porous pattern layer may be measured through, for example, FIB, SEM, TEM, TOF-SIMS, XPS, or EDS analysis. When the thickness of the porous pattern layer is within the above range, it may facilitate desorption and discharge of oxygen generated during a water electrolysis reaction to lower mass transfer resistance, and thus there is an advantage of reducing performance degradation at a high voltage.

A porosity of the porous pattern layer included in the electrode for a water electrolysis cell according to an embodiment may be 30% to 95%, and for example, may be 35% to 90%, 45% to 85%, or 50% to 80%. When the porosity of the porous pattern layer is within the above range, it may facilitate desorption and discharge of oxygen generated during a water electrolysis reaction to lower mass transfer resistance, and thus there is an advantage of reducing performance degradation at a high voltage.

### Microporous layer

An electrode for a water electrolysis cell according to an embodiment may further comprise a microporous layer positioned on one surface of the porous pattern layer, and the microporous layer may be one in which a plurality of fibers are integrated in a non-woven fabric form including a plurality of pores.

The microporous layer, which is also generally known by the term PTL (porous transport layer), is applied to a water electrolysis cell to bring water, which is a reactant, to a polymer electrolyte membrane (PEM), induce a product to move away from the PEM again, and collect and transfer electrons generated by an electrochemical reaction. In order to maximize the functions of the microporous layer, various physical properties, such as corrosion resistance, electrical conductivity, diffusibility, and mechanical strength, are required.

A length of the fiber may be adjusted without limitation as long as it is within a range of an active area of the electrode for a water electrolysis cell. In addition, a diameter of the fiber may be 10 *µ*m to 70 *µ*m, and for example, may be 12 *µ*m to 65 *µ*m, 13 *µ*m to 60 *µ*m, or 14 *µ*m to 50 *µ*m. When the fiber has a length and a diameter in the ranges, it may serve to efficiently collect and transfer a material or electrons reacting in the water electrolysis cell.

A thickness of a microporous layer included in an electrode for a water electrolysis cell according to an embodiment may be 100 *µ*m to 2,000 *µ*m, and for example, may be 150 *µ*m to 500 *µ*m, 170 *µ*m to 290 *µ*m, or 200 *µ*m to 250 *µ*m. Here, a thickness of a coating layer may be measured through, for example, FIB, SEM, TEM, TOF-SIMS, XPS, or EDS analysis. When the thickness of the microporous layer is within the range, it may serve to efficiently collect and transfer a material or electrons reacting in the water electrolysis cell.

A porosity of a microporous layer included in an electrode for a water electrolysis cell according to an embodiment may be 30% to 90%, and for example, may be 35% to 85%, 45% to 80%, or 50% to 80%. When the porosity of the microporous layer is within the range, it may serve to efficiently collect and transfer a material or electrons reacting in the water electrolysis cell.

### Method of manufacturing an electrode for a water electrolysis cell

A manufacturing method of an electrode for a water electrolysis cell according to an embodiment comprises: (i) manufacturing a nanowire comprising a metal oxide; (ii) mixing the nanowire and a fluorine precursor, and then performing heat treatment to manufacture a nanowire comprising a fluorine-doped metal oxide; (iii) disposing a first patterning mask comprising a plurality of slits extending in a first direction and spaced apart in a second direction different from the first direction, on a catalyst layer comprising active particles including a noble metal oxide and an ion conductor; and (iv) spraying a slurry in which the nanowires comprising the fluorine-doped metal oxide are dispersed on the first patterning mask to form a plurality of first patterns on the catalyst layer.

In one embodiment, the step (i) may be performed according to a manufacturing method such as a hydrothermal synthesis method, an electrospinning synthesis method, an electroplating method, or the like, and more specifically, may be performed according to an electrospinning synthesis method. More specifically, a metal oxide precursor may be mixed in a predetermined solvent to prepare a spinning solution, and the spinning solution may be electrospun onto a current collector plate and then heat-treated to manufacture a nanowire including a metal oxide.

The metal oxide precursor refers to a material of a preceding stage of the metal oxide. A type of the metal oxide may be tungsten oxide, titanium oxide, nickel oxide, ruthenium oxide, tantalum oxide, tin oxide, cobalt oxide, or a combination thereof, and may preferably be tin oxide (SnO₂). Accordingly, a type of the metal oxide precursor is not limited as long as it may produce SnO₂, which is a final product. For example, tin ethoxide, tin butoxide, tin isopropoxide, SnCl₂, SnCl₂·2H₂O, SnCl₂·5H₂O, Sn(OH)₄, or Sn(SO₄)₂ may be used as the metal oxide precursor, and more specifically, SnCl₂ may be used.

A type of the solvent is not limited as long as it may dissolve the metal oxide precursor. For example, the solvent may include water, an alcohol, dimethylformamide (DMF), or a combination thereof, and the alcohol may include methanol, ethanol, butanol, or isopropanol.

A solution in which the metal oxide precursor is mixed in the solvent may further include a dispersant, and the dispersant may include polyvinylpyrrolidone (PVP).

After the spinning solution is electrospun onto the current collector plate, a first heat treatment process may be performed. The first heat treatment may be performed in an air atmosphere, a first heat treatment temperature may be 400°C to 600°C, 410°C to 590°C, 420°C to 580°C, 430°C to 570°C, 440°C to 560°C, or 450°C to 550°C, and a first heat treatment time may be 4 hours to 8 hours, or 5 hours to 7 hours.

The nanowire may be adjusted to various sizes and shapes according to pH, temperature, time, and the like, and a length of the nanowire may be 1 *µ*m to 200 *µ*m, and for example, may be 3 *µ*m to 180 *µ*m, 5 *µ*m to 165 *µ*m, or 10 *µ*m to 150 *µ*m. In addition, a diameter of the nanowire may be 0.1 *µ*m to 1 *µ*m, and for example, may be 0.1 *µ*m to 1 *µ*m, 0.2 *µ*m to 0.9 *µ*m, or 0.2 *µ*m to 0.8 *µ*m. When the nanowire has a length and a diameter within the ranges, electrical conductivity is improved due to networking of metal oxide particles, and thus there is an advantage that contact resistance may be reduced.

In one embodiment, a type of the fluorine precursor in the step (ii) may include at least one material selected from the group consisting of NH₄F and NH₄HF₂, and may preferably be NH₄F. At this time, a molar ratio of the nanowire and the fluorine precursor may be 1:0.1 to 1:20, and for example, may be 1:0.5 to 1:20, 1:1 to 1:20, 1:3 to 1:20, 1:8 to 1:20, 1:13 to 1:20, or 1:18 to 1:20. When the molar ratio of the nanowire and the fluorine precursor is within the range, an amount of doped fluorine may be easily adjusted, making it possible to uniformly dope fluorine, thereby reducing a sheet resistance of the electrode and improving performance of the water electrolysis cell.

After mixing the nanowire and the fluorine precursor, a second heat treatment process may be performed. The second heat treatment may be performed in an inert gas atmosphere, a second heat treatment temperature may be 80°C to 450°C, 100°C to 430°C, or 120°C to 400°C, and a second heat treatment time may be 4 hours to 8 hours, 4.5 hours to 7.5 hours, or 5 hours to 7 hours.

The fluorine precursor may be in a solid state, and the fluorine precursor in the solid state may be vaporized through the second heat treatment and doped into the nanowire including the metal oxide of one-dimensional structure. According to a general solution-based synthesis method, there is a problem that it is difficult to adjust a doping amount of fluorine, but when the fluorine precursor in a solid state is used, the doping amount of fluorine may be easily adjusted, and aggregation may be suppressed during a process of doping fluorine into the nanowire including the metal oxide, thereby synthesizing uniform particles.

In one embodiment, in the steps (iii) and (iv), after disposing a first patterning mask including a plurality of slits extending in a first direction and spaced apart in a second direction different from the first direction on a catalyst layer including active particles including a noble metal oxide and an ion conductor, a slurry in which nanowires including a fluorine-doped metal oxide are dispersed may be sprayed on the first patterning mask to form a plurality of first patterns on the catalyst layer.

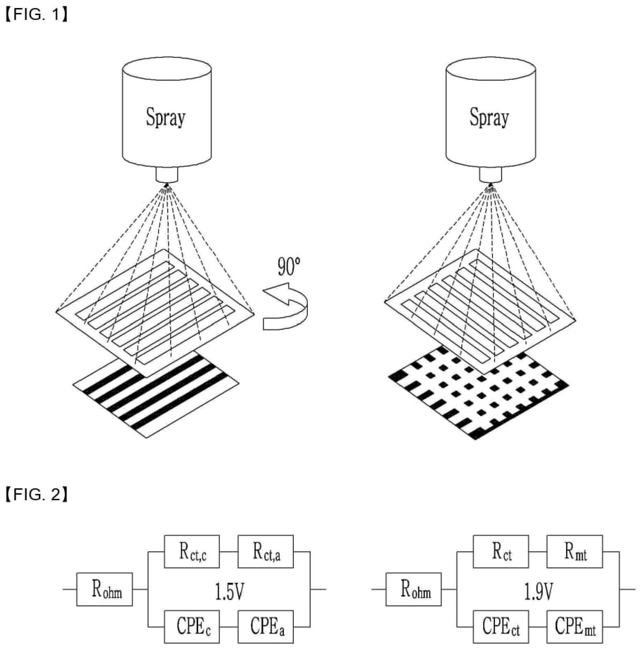

FIG. 1 is an illustration showing a manufacturing method of an electrode for a water electrolysis cell according to an embodiment. As shown in FIG. 1, a porous pattern layer may be manufactured by spinning a slurry, in which nanowires comprising the fluorine-doped metal oxide manufactured in step (ii) are dispersed, onto a current collector plate to form a first layer of a first pattern extending in a first direction and spaced apart in a second direction.

An extension length in the first direction of the slit included in the first patterning mask may be adjusted without limitation as long as it is within a range of an active area of an electrode for a water electrolysis cell. In addition, a width in the second direction of the slit included in the first patterning mask may be 20 *µ*m to 800 *µ*m, and for example, may be 20 *µ*m to 400 *µ*m, 20 *µ*m to 250 *µ*m, 80 *µ*m to 200 *µ*m, or 100 *µ*m to 150 *µ*m. In addition, a separation distance in the second direction of the slit included in the first patterning mask may be 20 *µ*m to 800 *µ*m, and for example, may be 20 *µ*m to 400 *µ*m, 20 *µ*m to 250 *µ*m, 80 *µ*m to 200 *µ*m, or 100 *µ*m to 150 *µ*m.

The slurry may be a slurry in which the nanowires including the fluorine-doped metal oxide are mixed with an ionomer, and the ionomer may be a cation conductor having a cation exchange group capable of exchanging cations, or an anion conductor having an anion exchange group capable of exchanging anions such as a hydroxy ion, a carbonate, or a bicarbonate.

The cation exchange group may be any one selected from the group consisting of a sulfonic acid group, a carboxyl group, a boronic acid group, a phosphoric acid group, an imide group, a sulfonimide group, a sulfonamide group, and combinations thereof, and may generally be a sulfonic acid group or a carboxyl group.

The cation conductor may include the cation exchange group, and may include a fluorine-based polymer including fluorine in a main chain; a hydrocarbon-based polymer such as benzimidazole, polyamide, polyamideimide, polyimide, polyacetal, polyethylene, polypropylene, acrylic resin, polyester, polysulfone, polyether, polyetherimide, polyethersulfone, polycarbonate, polystyrene, polyphenylene sulfide, polyether ether ketone, polyether ketone, polyaryl ether sulfone, polyphosphazene, or polyphenylquinoxaline; a partially fluorinated polymer such as a polystyrene-graft-ethylenetetrafluoroethylene copolymer or a polystyrene-graft-polytetrafluoroethylene copolymer; a sulfonimide, and the like.

In addition, in the cation conductor, H in the cation exchange group at a side chain terminal may be substituted with Na, K, Li, Cs, or tetrabutylammonium. When substituting H with Na in the cation exchange group at the end of the side chain, NaOH is used for substitution during the preparation of a carbon structure composition, when substituting with tetrabutylammonium, tetrabutylammonium hydroxide is used for substitution, and K, Li, or Cs may also be substituted using an appropriate compound.

As the anion conductor, a polymer doped with a metal hydroxide may generally be used, and specifically, a poly(ethersulfone), a polystyrene, a vinyl-based polymer, a poly(vinyl chloride), a poly(vinylidene fluoride), a poly(tetrafluoroethylene), a poly(benzimidazole), or a poly(ethylene glycol) doped with a metal hydroxide may be used.

A weight ratio of the nanowire including the fluorine-doped metal oxide and the ionomer in the slurry may be 0.1:1 to 1:1. When a content of the ionomer is included in the range, there is an advantage in that performance of the water electrolysis cell is improved, and simultaneously, aggregation between ionomers due to an excess of the ionomer may be suppressed.

### Membrane-electrode assembly for a water electrolysis cell

A membrane-electrode assembly for a water electrolysis cell according to an embodiment comprises a polymer electrolyte membrane, an oxygen evolution electrode positioned on one surface of the polymer electrolyte membrane and comprising the electrode for a water electrolysis cell; and a hydrogen evolution electrode positioned on the other surface of the polymer electrolyte membrane.

Hereinafter, the oxygen evolution electrode, the hydrogen evolution electrode, and the polymer electrolyte membrane will be described in detail.

### Oxygen Evolution Electrode

The oxygen evolution electrode refers to an electrode where an oxygen evolution reaction (OER) occurs, and the oxygen evolution electrode comprises the above-described electrode for a water electrolysis cell, and since the electrode for a water electrolysis cell has been described above, a detailed description thereof will be omitted.

### Hydrogen Evolution Electrode

The hydrogen evolution electrode refers to an electrode where a hydrogen evolution reaction (Hydrogen Evolution Reaction (HER)) occurs, and the hydrogen evolution electrode may include a catalyst for a hydrogen evolution reaction. The catalyst for a hydrogen evolution reaction may comprise active particles and a support, the active particles may include a noble metal, and the noble metal may be a platinum-based precious metal.

As the platinum-based precious metal (platinum based precious metal), platinum (Pt) and/or a Pt-M alloy may be used. The M may be palladium (Pd), ruthenium (Ru), iridium Ir, osmium (Os), gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin Sn, molybdenum (Mo), tungsten (W), lanthanum (La), or rhodium (Rh).

Specifically, as the Pt-M alloy, Pt-Pd, Pt-Sn, Pt-Mo, Pt-Cr, Pt-W, Pt-Ru, Pt-Ni, Pt-Co, Pt-Y, Pt-Ru-W, Pt-Ru-Ni, Pt-Ru-Mo, Pt-Ru-Rh-Ni, Pt-Ru-Sn-W, Pt-Ru-Ir-Ni, Pt-Co-Mn, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, Pt-Cr-Ir, or a mixture thereof may be used.

The support may be a carbon-based support. The carbon-based support may be graphite, super P, carbon fiber, carbon sheet, carbon black, Ketjen Black, Denka black, acetylene black, carbon nanotube (CNT), carbon sphere, carbon ribbon, fullerene, active carbon, carbon nanofiber, carbon nanowire, carbon nanoball, carbon nanohorn, carbon nanocage, carbon nanoring, ordered nano-/meso-porous carbon, carbon aerogel, mesoporous carbon, graphene, stabilized carbon, activated carbon, or a combination thereof.

The oxygen evolution electrode and the hydrogen evolution electrode may each comprise only a catalyst layer comprising a catalyst for an oxygen evolution reaction and a catalyst for a hydrogen evolution reaction, but may further comprise an electrode substrate together with the catalyst layer. In this case, the electrode substrate may serve to diffuse a fuel and an oxidant to the catalyst layer while serving to support the electrode. The electrode substrate is not particularly limited, and any known electrode substrate may be used. Specifically, the electrode substrate may be carbon paper, carbon cloth, carbon felt, or metal cloth (referring to a porous film constituted by a metal cloth in a fibrous state or a metal film formed on a surface of a cloth formed of polymer fibers) that may be used as a conductive substrate. As the electrode substrate, one treated to be water-repellent with a fluorine-based resin may be used, and in this case, it may prevent reactant diffusion efficiency from being reduced by water generated during operation of the water electrolysis cell. As the fluorine-based resin, polytetrafluoroethylene, polyvinylidene fluoride, polyhexafluoropropylene, polyperfluoroalkyl vinyl ether, polyperfluorosulfonyl fluoride, alkoxyvinyl ether, fluorinated ethylene propylene, polychlorotrifluoroethylene, or a copolymer thereof may be used.

### Polymer Electrolyte Membrane

The polymer electrolyte membrane has an ion exchange function of transporting hydrogen ions generated in the oxygen evolution electrode to the catalyst for a hydrogen evolution reaction. A polymer electrolyte membrane according to an embodiment may include a porous support including a plurality of pores, and an ion conductor filling the pores of the porous support.

The porous support may be a fluorine-based support or a nanoweb support. The fluorine-based support may correspond to, for example, expanded polytetrafluoroethylene (e-PTFE) having a microstructure of polymer fibrils, or a microstructure in which nodes are connected to each other by fibrils. In addition, a film having a microstructure of polymer fibrils in which the nodes do not exist may also be used as the porous support.

The fluorine-based support may include a perfluorinated polymer. The porous support may be formed by extruding dispersion polymerized PTFE into a tape in the presence of a lubricant and stretching a material obtained thereby to result in a more porous and stronger porous support. In addition, an amorphous content of the PTFE may be increased by heat-treating the e-PTFE at a temperature exceeding a melting point (about 342°C) of the PTFE. The e-PTFE film manufactured by the method may have micropores having various diameters and a porosity. The e-PTFE film manufactured by the method may have porosity of at least 35%, and a diameter of the micropores may be about 0.01 to 1 *µ*m (micrometers).

The nanoweb support may be a non-woven fibrous web consisting of a plurality of randomly oriented fibers. The non-woven fibrous web refers to a sheet having a structure of individual fibers or filaments that are interlaid, but not in the same manner as a woven cloth. The non-woven fibrous web may be manufactured by carding, garneting, air-laying, wet-laying, melt blowing, spun bonding, or stitch bonding.

The fibers may comprise one or more polymer materials, and any material generally used as a fiber-forming polymer material may be used, and specifically, a hydrocarbon-based fiber-forming polymer material may be used. For example, the fiber-forming polymer material may include a polyolefin such as polybutylene, polypropylene, and polyethylene, a polyester such as polyethylene terephthalate and polybutylene terephthalate, a polyamide (nylon-6 and nylon-6,6), polyurethane, polybutene, polylactic acid, polyvinyl alcohol, polyphenylene sulfide, polysulfone, a fluid crystalline polymer, polyethylene-co-vinylacetate, polyacrylonitrile, a cyclic polyolefin, polyoxymethylene, a polyolefin-based thermoplastic elastomer, or a combination thereof.

The nanoweb support may be a support in which nanofibers are integrated into a non-woven fabric form including a plurality of pores.

As the nanofiber, a hydrocarbon-based polymer exhibiting excellent chemical resistance and having hydrophobicity so that there is no concern of shape deformation due to moisture in a high-humidity environment may be preferably used. Specifically, as the hydrocarbon-based polymer, nylon, polyimide, polyaramid, polyetherimide, polyacrylonitrile, polyaniline, polyethylene oxide, polyethylene naphthalate, polybutylene terephthalate, styrene butadiene rubber, polystyrene, polyvinyl chloride, polyvinyl alcohol, polyvinylidene fluoride, polyvinyl butylene, polyurethane, polybenzoxazole, polybenzimidazole, polyamideimide, polyethylene terephthalate, polyphenylene sulfide, polyethylene, polypropylene, a copolymer thereof, or a mixture thereof may be used.

The nanoweb support is an aggregate of nanofibers in which nanofibers manufactured by electrospinning are randomly arranged. In this case, the nanofiber may have an average diameter of 40 nm to 5000 nm, when calculated from an average of 50 fiber diameters measured using a scanning electron microscope (Scanning Electron Microscope, JSM6700F, JEOL) in consideration of a porosity and a thickness of the nanoweb. When the average diameter of the nanofiber is within the above range, mechanical strength may be excellent, and an appropriate porosity may be secured.

A thickness of the non-woven fibrous web may be 10 *µ*m to 50 *µ*m or 15 *µ*m to 43 *µ*m. When the thickness of the non-woven fibrous web is within the above range, mechanical strength, weight reduction, and integration may be excellent. The non-woven fibrous web may have a basic weight of 5 to 30 mg/cm². When the basis weight of the non-woven fibrous web is less than the numerical range, visible pores may be formed, and thus it may be difficult to function as a porous support, and when the basic weight is greater than the numerical range, it may be manufactured like a form of paper or a woven cloth in which pores are hardly formed. The porosity may be calculated by a ratio of an air volume in the porous support to a total volume of the porous support according to Equation 1 below. At this time, the total volume may be calculated by preparing a rectangular-shaped sample and measuring a width, a length, and a thickness, and the air volume may be obtained by measuring a mass of the sample and then subtracting a polymer volume inversely calculated from a density from the total volume. [Equation 1] 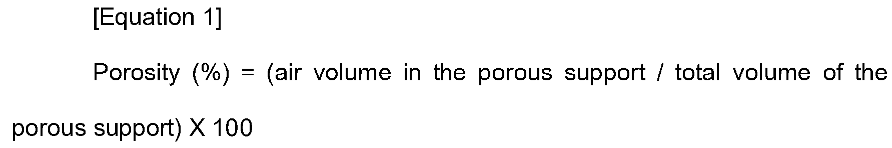 Porosity (%) = (air volume in the porous support / total volume of the porous support) X 100

For example, the porosity of the porous support may correspond to 30% to 90%. When the porosity of the porous support is within the range, a problem of deterioration of impregnability of the ion conductor or a problem in which a post-process does not proceed smoothly due to deterioration of stability may not occur.

The ion conductor is as described above. The ion conductor included in the polymer electrolyte membrane may be the same as or different from the ion conductor included in the oxygen evolution electrode, and for example, the ion conductor included in the polymer electrolyte membrane may be the same as the ion conductor included in the oxygen evolution electrode.

### Water electrolysis cell

In one embodiment, a water electrolysis cell comprises the membrane-electrode assembly for a water electrolysis cell.

The water electrolysis cell is the same as a known one except for comprising the membrane-electrode assembly according to the present application, a detailed description thereof will be omitted.

### [Mode for Invention]

Hereinafter, Examples and Comparative Examples of the present invention will be described. The following Examples are only examples of the present invention, and the present invention is not limited to the following Examples.

### Example 1

### 1. Preparation of a catalyst layer

An IrOₓ catalyst and an ionomer solution were mixed and dispersed such that an ionomer/catalyst ratio was 0.3, and stirred for 24 hours to prepare a catalyst composition for an oxygen generating reaction. The catalyst composition for an oxygen generating reaction is referred to as a first catalyst composition. The first catalyst composition was thinly applied onto a transfer substrate by spraying, decaling, or ultrasonic spray coating to prepare a catalyst layer.

### 2. Preparation of nanowires

After 0.5 g of SnCl₂ was added into 4 g of a solution in which dimethylformamide (DMF) and ethanol were mixed at a weight ratio of 1:1, it was uniformly mixed for 30 minutes, and 0.5 g of polyvinylpyrrolidone (PVP) was additionally mixed to prepare a spinning solution. The spinning solution was injected at a flow rate of 0.3 ml/hr, applied with a voltage of 18 kV, and spun onto a conductive current collector plate to prepare a nonwoven fabric-type membrane, and then it was heat-treated at 500°C for 6 hours in an air atmosphere to prepare SnO₂ nanowires having a size of a diameter of 500 nm and a length of 150 *µ*m.

After mixing the manufactured SnO₂ nanowires and NH4F as a fluorine precursor, the particle sizes of the powders are homogenized to obtain a homogeneous mixture. Here, an amount of doped fluorine may be adjusted by adjusting amounts of the fluorine precursor and the prepared SnO₂ powder. The mixture whose molar ratio was adjusted was heat-treated at a temperature of 400°C for 6 hours in an inert gas atmosphere, and after the heat-treated powder was washed and filtered using ethanol and distilled water, it was dried at a temperature of 60°C for 12 hours to prepare fluorine-doped SnO₂ nanowires.

### 3. Preparation of a porous pattern layer

The prepared fluorine-doped SnO₂ nanowires were dispersed in isopropyl alcohol with a Nafion ionomer resin solution (5 wt%) at a weight ratio of 4.1:1 to prepare a slurry. After a pattern mask comprising patterns having a length of 5 cm, a width of 125 *µ*m, and a separation distance of 125 *µ*m was aligned on the catalyst layer, the prepared slurry was sprayed to coat the catalyst layer with a coating thickness of 0.5 *µ*m. Next, the pattern mask was rotated to perform a secondary coating, the coating was performed with the rotation angle of the pattern mask in a vertical direction, and the coating was performed to a thickness of 0.5 *µ*m to prepare a first electrode layer in which the catalyst layer and the porous pattern layer were formed on the transfer substrate.

### 4. Preparation of a membrane-electrode assembly for a water electrolysis cell

A catalyst having a platinum particle content of 46 wt% on a graphitized support and an ionomer solution were mixed such that an ionomer/carbon ratio was 1.0 to prepare a second catalyst composition. After the second catalyst composition was applied on a transfer substrate to prepare a second electrode layer, the first electrode layer was transferred to one side of a polymer electrolyte membrane, and the second electrode layer was transferred to and bonded to the opposite side thereof to prepare a membrane-electrode assembly.

### Example 2

In the preparation of the porous pattern layer, a membrane-electrode assembly for a water electrolysis cell was prepared in substantially the same manner as in Example 1, except that coating was performed using a pattern mask consisting of patterns having a length of 5 cm, a width of 30 *µ*m, and a separation distance of 30 *µ*m.

### Example 3

In the preparation of the porous pattern layer, a membrane-electrode assembly for a water electrolysis cell was prepared in substantially the same manner as in Example 1, except that coating was performed using a pattern mask consisting of patterns having a length of 5 cm, a width of 300 *µ*m, and a separation distance of 300 *µ*m.

### Comparative Example 1

A membrane-electrode assembly for a water electrolysis cell was prepared in substantially the same manner as in Example 1, except that the nanowires and the porous pattern layer were not prepared.

### Comparative Example 2

In the manufacture of the nanowire, a membrane-electrode assembly for a water electrolysis cell was prepared in substantially the same manner as in Example 1, except that fluorine doping was not performed on the SnO₂ nanowire.

### Evaluation Example 1: Impedance Analysis

While applying a flow rate of 5 ml/min at 80°C, impedance analysis was performed by EIS fitting with the equivalent circuit of FIG. 2 in a frequency range from 50 kHz to 50 mHz at applied voltages of 1.5 V and 1.9 V. A resistance component in a high frequency region (High Frequency Resistance; HFR) was measured and evaluated, and the result is shown in Table 1. The resistance component in the high frequency region is a factor representing contact resistance, and a larger value thereof means that an interface between components is unstable and contact becomes poor.

Additionally, impedance analysis was performed by EIS fitting using the equivalent circuit of FIG. 2 in a frequency range from 50 kHz to 50 mHz at 1.9 V, and the results are shown in Table 1. Here, R_{ct} refers to a charge transfer resistance due to a water electrolysis reaction, and Rₘₜ refers to a mass transfer resistance of a gas product produced by the water electrolysis reaction, and larger values thereof mean that they act as a resistance and affect water electrolysis performance, thereby causing performance degradation.

**[Table 1]**

| | HFR (mΩ·cm²) | R_{ct} (mΩ·cm²) | Rₘₜ (mΩ·cm²) |
|---|---|---|---|
| Example 1 | 49.9 | 18.7 | 12.6 |
| Example 2 | 76.5 | 20.4 | 14.5 |
| Example 3 | 131.8 | 23.2 | 13.0 |
| Comparative Example 1 | 142.5 | 21.1 | 25.2 |
| Comparative Example 2 | 257.5 | 55.5 | 33.1 |

Referring to Table 1, in comparison with Comparative Example 1 using a general electrode or Comparative Example 2, in which HFR was greatly increased due to not having electrical conductivity by consisting only of tin oxide (SnO₂) not doped with fluorine, it may be confirmed that when an electrode according to an embodiment is used, HFR is decreased, thereby effectively reducing a contact resistance of an electrode interface.

Additionally, in comparison with Example 2 in which a pattern width is smaller than a certain level so that an influence on electrical characteristics of an interface is increased to cause interference, or Example 3 in which a pattern width is larger than a certain level so that a contact area is decreased and an effect of a pattern electrode layer is reduced, it may be confirmed that in the case of Example 1 in which the width of the pattern is optimized, HFR shows a minimum, thereby effectively reducing a contact resistance of an electrode interface.

### Evaluation Example 2: Performance Evaluation

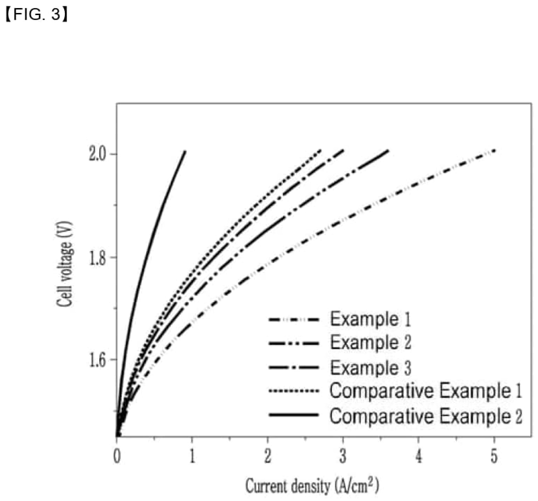

While applying a flow rate of 5 ml/min at 80°C, performance was evaluated by measuring voltage and resistance at specific currents from 1 mA to 2 A, and the result is shown in FIG. 3.

Referring to FIG. 3, it may be confirmed that when the porous pattern layer according to Example 1 is included, ohmic resistance in water electrolysis performance may be lowered by lowering contact resistance at an interface between the electrode and the microporous layer, and thereby performance is improved.

In addition, compared to Example 2 and Example 3, it may be confirmed that the improvement in performance of Example 1 affects mass transfer resistance due to an interval of the porous pattern layer, and the tendency thereof may be confirmed in terms of water electrolysis performance, and in the case of Comparative Example 2 having a porous pattern layer without conductivity, it may be confirmed that water electrolysis performance is the lowest due to a rapid increase in ohmic resistance.

Although the preferred embodiments have been described in detail above, the scope of the present invention is not limited thereto, and various modifications and improvements by those skilled in the art using the basic concept defined in the following claims also fall within the scope of the present invention.

## Claims

1. An electrode for a water electrolysis cell comprising:
a catalyst layer comprising active particles including a noble metal oxide and an ion conductor; and
a porous pattern layer positioned on one surface of the catalyst layer,
wherein the porous pattern layer comprises first patterns extending in a first direction parallel to the one surface of the catalyst layer and spaced apart and disposed in a second direction parallel to the one surface of the catalyst layer and different from the first direction,
the first pattern comprises a plurality of stacked nanowires, and
the nanowire comprises a fluorine-doped metal oxide.

2. The electrode for a water electrolysis cell of claim 1, wherein
the first patterns are provided in a plurality.

3. The electrode for a water electrolysis cell of claim 1, wherein
a width of the first pattern in the second direction is 20 *µ*m to 800 *µ*m,
a separation distance of the first pattern in the second direction is 20 *µ*m to 800 *µ*m, and
a thickness of the first pattern in a third direction perpendicular to the one surface of the catalyst layer is 0.01 *µ*m to 500 *µ*m.

4. The electrode for a water electrolysis cell of claim 1, wherein
the porous pattern layer further comprises second patterns positioned on one surface of the first patterns, extending in the second direction, and spaced apart and disposed in the first direction,
the second pattern comprises a plurality of stacked nanowires, and
the nanowire comprises a fluorine-doped metal oxide.

5. The electrode for a water electrolysis cell of claim 4, wherein
the second patterns are provided in a plurality.

6. The electrode for a water electrolysis cell of claim 4, wherein
a width of the second pattern in the first direction is 20 *µ*m to 800 *µ*m,
a separation distance of the second pattern in the first direction is 20 *µ*m to 800 *µ*m, and
a thickness of the second pattern in a third direction perpendicular to the one surface of the catalyst layer is 0.01 *µ*m to 500 *µ*m.

7. The electrode for a water electrolysis cell of claim 1, wherein
the metal oxide is tin oxide.

8. The electrode for a water electrolysis cell of claim 1, wherein
a content of fluorine is 1 at% to 10 at% based on 100 at% of a total amount of components measured by X-ray Photoelectron Spectroscopy (XPS) in the entire fluorine-doped metal oxide.

9. The electrode for a water electrolysis cell of claim 1, wherein
a length of the nanowire is 1 *µ*m to 200 *µ*m, and
a diameter of the nanowire is 0.1 *µ*m to 1.0 *µ*m.

10. The electrode for a water electrolysis cell of claim 1, wherein
a thickness of the porous pattern layer is 0.01 *µ*m to 500 *µ*m.

11. The electrode for a water electrolysis cell of claim 1, wherein
a porosity of the porous pattern layer is 30% to 95%.

12. The electrode for a water electrolysis cell of claim 1, wherein
the electrode for a water electrolysis cell further comprises a microporous layer positioned on one surface of the porous pattern layer.

13. A method of manufacturing an electrode for a water electrolysis cell comprising:
(i) manufacturing a nanowire comprising a metal oxide;
(ii) mixing the nanowire and a fluorine precursor, and then performing heat treatment to manufacture a nanowire comprising a fluorine-doped metal oxide;
(iii) disposing a first patterning mask comprising a plurality of slits extending in a first direction and spaced apart in a second direction different from the first direction, on a catalyst layer comprising active particles including a noble metal oxide and an ion conductor; and
(iv) spraying a slurry in which the nanowires comprising the fluorine-doped metal oxide are dispersed on the first patterning mask to form a plurality of first patterns on the catalyst layer.

14. The method of manufacturing an electrode for a water electrolysis cell of claim 13, wherein
a width in the second direction of the slit included in the first patterning mask is 20 *µ*m to 800 *µ*m, and
a separation distance in the second direction of the slit included in the first patterning mask is 20 *µ*m to 800 *µ*m.

15. A membrane-electrode assembly for a water electrolysis cell comprising:
a polymer electrolyte membrane;
an oxygen evolution electrode positioned on one surface of the polymer electrolyte membrane and including the electrode for a water electrolysis cell according to claim 1; and
a hydrogen evolution electrode positioned on the other surface of the polymer electrolyte membrane.

16. A water electrolysis cell comprising the membrane-electrode assembly for a water electrolysis cell according to claim 15.
